# EUROPÄISCHE PATENTSCHRIFT

(11) **EP 0 526 812 B1**
(45) Veröffentlichungstag und Bekanntmachung des Hinweises auf die Patenterteilung: **18.05.1994**
(21) Anmeldenummer: 92112661.1
(22) Anmeldetag: 24.07.1992
(51) Int. Cl.: E06B 3/32

(54) **Fenster mit aufklappbarem Fensterflügel**
Window with a swivelling wing
Fenêtre avec un battant relevable

(30) Priorität: 03.08.1991 DE 4125834
(43) Veröffentlichungstag der Anmeldung: 10.02.1993
(73) Patentinhaber: Kunert, Heinz, Dr., 50935 Köln (DE)
(72) Erfinder: Kunert, Heinz, Dr., 50935 Köln (DE)
(74) Vertreter: Rehders, Jochen, Dipl.-Ing.

(56) Entgegenhaltungen:
- DE-A- 2 754 955
- DE-A- 2 907 626
- DE-U- 9 111 457

## Beschreibung

Die Erfindung betrifft ein Fenster mit aufklappbarem Fensterflügel und einer Isolierglasscheibe aus einer Weißglasscheibe und einer für Sonnenstrahlung selektiven Absorptionsscheibe.

Isolierglaselemente dieser Art weisen zufolge der vorerwähnten Glasscheibenkombination für den Durchgang von solarer Energiestrahlung je nach Positionierung zur Strahlungsquelle unterschiedliche Transmissionseigenschaften auf. Ein solches Isolierglaselement läßt sich daher je nach Positionierung der Absorptionsscheibe zur Strahlungsquelle hin im Sommer als Sonnenschutzelement mit einem geringen Strahlungsenergiedurchgang, im Winter dagegen als Solarkollektorelement mit einem hohen solaren Strahlungsenergiedurchgang nutzen. Indem derartige Isolierglasscheiben umkehrbar gestaltet werden, d. h, daß die Isolierglasscheiben nach Wahl mit der einen oder der anderen ihrer Oberflächen zur Außenseite eines Raums weisen können, lassen sich die Kosten für die Klimatisierung von mit derartigen Isolierglasscheiben ausgerüsteten Räumen sowohl im Winter als auch im Sommer vermindern.

Die in Sommerposition nach außen weisende, hinsichtlich des nichtsichtbaren Bereichs der Sonnenstrahlung selektiv ausgebildete Absorptionsscheibe des Isolierglaselements absorbiert die nichtsichtbaren Anteile des solaren Energiespektrums und wandelt sie in Wärmeenergie um, die konvektiv und über Strahlung an die Außenatmosphäre abgeführt wird. Dieser Effekt wird durch das Aufbringen einer für langwellige Wärmestrahlung emissionsmindernden Beschichtung auf der inneren Oberfläche der Absorptionsscheibe unterstützt. Der sichtbare solare Strahlungsanteil durchdringt sowohl die Absorptionsscheibe als auch die dahinter angeordnete, für das gesamte solare Strahlungsspektrum durchlässige Weißglasscheibe des Isolierglaselements.

Durch ein Wenden des Isolierglaselements um 180° weist in einer Winterposition die Weißglasscheibe zur Strahlungsquelle hin. Die auftreffende Sonnenstrahlung durchdringt diese Scheibe annähernd verlustlos und fällt auf die nunmehr zum Raum gewandte Absorptionsscheibe. Sowohl die durchtretenden sichtbaren Anteile als auch die von dieser Scheibe absorbierten und in Wärmeenergie verwandelten Anteile des solaren Strahlungsspektrums kommen dem Raum zugute, da die nunmehr nach außen zugewandte emissionsmindernde Beschichtung der Absorptionsscheibe die Wärmeabstrahlung nach außen hin verhindert.

Ein zusätzlicher Effekt erhöht den raumseitigen Energiegewinn. Bereits bei geringer Intensität der Sonnenstrahlung wird die raumzugewandte Absorptionsscheibe auf Raumtemperatur erwärmt. Bei dieser Temperaturangleichung nimmt die Scheibe gegenüber der Raumluft einen quasi unendlichen thermischen Widerstandswert an. Der effektive k-Wert des Isolierglaselements beträgt dann k = 0.

Bekannt sind aus der Baupraxis insbesondere zwei Versionen von Wendefenstern, die vornehmlich dem Zweck dienen, bei geschlossenem Fenster eine Reinigung der außenliegenden Scheibe vom Innenraum aus vornehmen zu können.

Bei der einen Version ist der die Isolierscheibe aufnehmende Flügelrahmen innerhalb des Blendrahmens mittig gelagert. Die Abdichtung und die mechanische Verriegelung des Fensterflügels erfolgt durch seitlich in den Blendrahmen umlaufend eingelassene Profilleisten, die beim Schließen in entsprechende Fugen des Flügelrahmens eingreifen.

Als nachteilig für dieses Konzept erweist sich der hohe Aufwand zur Darstellung der Verschlußmechanik, die zugleich die Dichtungsfunktion als auch die Festigkeit gegenüber den Windlasten zu erfüllen hat.

Ein weiteres Konzept für die Gestaltung eines Wendefensters ist das der Schwenkung durch Verlagerung einer Seitenachse des Flügelrahmes von einer Blendrahmenseite auf die gegenüberliegende bei Führung der Achse im Blendrahmen. Als technisch kompliziert und aufwendig erweist sich hier die parallele Führung der Achse in einer entsprechenden Nut des Blendrahmens, da die Achse stets beidseitig fixiert und stabilisiert in senkrechter Position verlagert werden muß.

Bei beiden Versionen wird das Wenden des Fensterflügles innerhalb der Ebene des Blendrahmens vollzogen. Im Falle der Nutzung thermisch asymmetrischer Isolierverglasungen für den eingangs beschriebenen Zweck erwächst für beide Konzepte daraus generell ein erheblicher Nachteil.

Der Flügelrahmen ist in der Sommer- und in der Winterperiode jeweils unterschiedlichen Klimata ausgesetzt. Insbesondere bei Holzfenstern, aber auch bei Kunststoff- und Aluminiumfenstern sind infolge der wechselseitigen klimatischen Einwirkungen ein unterschiedliches Ausdehnungsverhalten der Rahmenflanken und somit Verwerfungen des Flügelrahmens zu erwarten.

In der deutschen Offenlegungsschrift 27 54 955 ist ein Fenster mit einer thermisch asymmetrischen Isolierglasscheibe, die sich um 180° wenden läßt, beschrieben. Dabei kommt ein anderes Wendefensterkonzept zum Tragen. Das Wenden der Isolierglasscheibe wird in einem üblichen Drehflügel vollzogen und zwar nach Öffnen dieses Drehflügels um 90°, also außerhalb der Ebene des Blendrahmens. Das bekannte Fenster weist eine Isolierglasscheibe auf, über deren mittleren Abschnitt in der senkrechten Symmetrieachse U-förmige Lagerkörper greifen, die mit Lagern zusammenarbeiten, die in einem starren Rahmen untergebracht sind, der der Rahmen eines Fensterflügels sein kann. Zu beiden Seiten der Isolierglasscheibe sind Dicht- und Positionierrahmen angeordnet, die dazu dienen, in ihrer Schließstellung die Abdichtung der Verglasung sicherzustellen. Die Dicht- und Positionierrahmen sind von dem starren Flügelrahmen getragen. Sie sind mittels Scharnieren am Rahmen angelenkt, wobei der außenliegende Dicht- und Positionierrahmen mit einer Rückstelleinrichtung versehen sein muß, um ihn nach dem Öffnen wieder an den Flügelrahmen heranzuziehen. Jeder Dicht- und Positionierrahmen weist zwei umlaufende Dichtungen auf, von denen die eine sich an den Flügelrahmen und die anderen an die Isolierglasscheibe anlegt, wenn die beiden Dicht- und Positionierrahmen mit den Flügelrahmen verriegelt sind. Durch Öffnen der Dicht- und Positionierrahmen wird die Isolierglasscheibe freigegeben und läßt sich um die Wendeachse um 180° drehen. Danach werden die Dicht- und Positionierrahmen wieder geschlossen, und diese Einheit läßt sich in üblicher Weise wie ein Fensterflügel öffnen. Es liegt auf der Hand, daß ein derartiger Fensterflügel teuer ist, da er aus insgesamt drei beweglichen Rahmen besteht, für die jeweils Schwenkgelenke in Form von Scharnieren vorgesehen sein müssen. Des weiteren müssen alle drei Rahmen Verriegelungselemente aufweisen, um sie untereinander und gegenüber dem feststehenden Blendrahmen festlegen zu können. Schließlich sind insgesamt vier umlaufende Dichtungen erforderlich, um die Isolierglasscheibe abzudichten und zu positionieren. Eine weitere umlaufende Dichtung ist erforderlich, um den Fensterflügel gegenüber dem Blendrahmen abzudichten.

Der Erfindung liegt die Aufgabe zugrunde, ein Fenster der eingangs erwähnten Art zu schaffen, das die thermischen Eigenschaften des bekannten Fensters aufweist, jedoch einfacher und kostengünstiger herzustellen ist.

Ausgehend von dieser Aufgabenstellung wird bei einem Fenster der eingangs erwähnten Art vorgeschlagen, daß erfindungsgemäß die Isolierglasscheibe innerhalb eines einen Fensterflügel bildenden Rahmens um eine senkrechte oder waagerechte Mittelachse um 180° wendbar angeordnet ist und gegenüber dem gebäudefesten Blendrahmen durch eine umlaufende Dichtung abgedichtet ist. Es ergibt sich somit, daß das erfindungsgemäße Fenster wie ein herkömmliches Fenster nur eine umlaufende Dichtung zwischen dem Fensterflügel und dem gebäudefesten Blendrahmen aufweist, wodurch die Herstellung ganz erheblich vereinfacht wird. Des weiteren kann ein die Isolierglasscheibe allseitig umfassender Rahmen vorgesehen sein, der nur zum Halten der Isolierglasscheibe und zur Aufnahme der Wendegelenke dient und mit der Isolierglasscheibe unlösbar verbunden ist. Die Abdichtung zwischen dem gebäudefesten Blendrahmen und der Isolierglasscheibe erfolgt direkt bzw. über den Isolierglasscheibenrahmen, der über die umlaufende Dichtung direkt am gebäudefesten Blendrahmen anliegt, so daß eine zusätzliche Dichtung für den Flügelrahmen nicht erforderlich ist, wenngleich die Anordnung einer umlaufenden Dichtung zwischen dem Flügelrahmen und dem Isolierglasscheibenrahmen zusätzlich möglich ist.

Aufgrund der Tatsache, daß die Abdichtung zwischen dem gebäudefesten Blendrahmen und der Isolierglasscheibe bzw. dem diese umfassenden Rahmen erfolgt, ist es möglich, auf einen Flügelrahmen ggf. ganz zu verzichten. In diesem Fall ist es möglich, um die Wendbarkeit um 180° zu gewährleisten, die Isolierglasscheibe bzw. den Isolierglasscheibenrahmen am gebäudefesten Blendrahmen über parallele Lenker anzulenken, die sich mit dem Isolierglasscheibenrahmen wahlweise verriegeln und lösen lassen, so daß die Isolierglasscheibe zum Öffnen des Fensterflügels mit den Lenkern undrehbar verbunden ist oder nach Lösen der Verriegelung ein Drehen der Isolierglasscheibe um 180° möglich ist.

Ist die Isolierglasscheibe schwenkbar in einem, einen Fensterflügel bildenden, am Blendrahmen schwenkbar angelenkten Rahmen angeordnet, so daß die Isolierglasscheibe oder der Isolierglasscheibenrahmen im geschlossenen Zustand des Flügelrahmens mit einer Seite am Blendrahmen anliegt und die Dichtung zwischen sich und dem gebäudefesten Blendrahmen einschließt, können die zur Wendeachse parallelen Außenseiten des Rahmens für die Isolierglasscheibe und die entsprechenden Innenseiten des den Fensterflügel bildenden Rahmens mit einem Radius entsprechend dem Abstand zum Schwenkgelenk zum Schwenken der Isolierglasscheibe um 180° gestaltet sein, so daß sich der Isolierglasscheibenrahmen mit geringem Spiel in den Flügelrahmen einpassen läßt. Die dem gebäudefesten Blendrahmen zugekehrten Seiten des Isolierglasscheibenrahmens und des Flügelrahmens können dann bevorzugterweise in einer Ebene liegen und an einem Vorsprung des gebäudefesten Blendrahmens anliegen. Zwischen dem gebäudefesten Blendrahmen und Flügelrahmen kann in üblicher Weise eine Verriegelung angeordnet sein. Eine weitere Verriegelung kann zwischen dem Flügelrahmen und dem Isolierglasscheibenrahmen angeordnet sein.

Die Verriegelung kann unter Anwendung der bei üblichen Fenstern benutzten Verrieglungsbeschlägen erfolgen. Während für die Verriegelung zwischen Blendrahmen und Flügelrahmen vorzugsweise ein dreiseitig umlaufendes Verrieglungsband Verwendung finden kann, reicht für die Verrieglung zwischen Flügelrahmen und Glasrahmen eine einfache vom Flügelrahmen in den Scheibenrahmen seitlich einlaufende Bolzenverriegelung aus, die verschließbar ausgeführt werden kann. Auf diese Weise kann etwa bei Bürogebäuden oder Hotels das Wenden des Glasrahmens außerhalb der entsprechenden Klimaperioden von unbefugten Personen verhindert werden.

In vorteilhafter Weise kann weiterhin auch für die Verriegelung zwischen Flügelrahmen und Blendrahmen ein zweistufiger Verrieglungsbeschlag Anwendung finden, der in einer ersten Stufe die Verriegelung zwischen Flügel- und Blendrahmen löst, und nach dem Öffnen des Flügelrahmens durch weitere Betätigung in einer zweiten Stufe dann gleichfalls die Verbindung zwischen Fensterrahmen und Glasrahmen öffnet.

Eine weitere Ausgestaltung bezieht sich darauf, den Flügelrahmen von innen an den Blendrahmen anzuschlagen und den Flügelrahmen bzw. den glasaufnehmenden Rahmen in seiner umlaufenden Breite so zu bemessen, daß seine zum Isolierglas weisende Kante nicht über die entsprechende Rahmenkante des Blendrahmens hinausragt. Auf diese Weise wird die Rahmung des Drehflügels nach dem Schließen des Fensters vom Blendflügel überdeckt und zwar in beiden Wendepositionen, so daß das Rahmenmaterial nicht den Beanspruchungen der Außenklimata ausgesetzt wird.

Das Material des Flügelrahmens bedarf dann keiner besonderen Schutzbehandlungen. Zudem können für die Flügelrahmungen Holzwerkstoffe wie verleimte Holzkonstrukte oder Leisten aus Holzfasermaterial Verwendung finden, also Materialien, die sich bisher für Außenrahmungen nicht als hinreichend witterungsstabil erwiesen haben. Durch das Konzept der Abdeckung des Flügelrahmens durch den Blendrahmen werden weiterhin höhere Wärmedämmwerte der Rahmenanteile des Fensters erreicht. In Anbetracht des niedrigen k-Wertes des hierbei verwendeten Isolierglaselements von ca. k = 1,2 W/qm K ist die Anhebung der Wärmedämmwerte der Fensterrahmung von besonderer Bedeutung.

Das Konzept der Abdeckung des Flügelrahmens durch den Blendrahmen erweist sich für den Fall der Beplankung von Holzfenstern mit metallenen oder Kunststoff-Profilleitsten als besonders vorteilhaft. In materialsparender Weise benötigt man dann die Beplankung nur für den Blendrahmen während man im Falle eines partiell über den Blendrahmen hinausragenden Flügelrahmens dessen Flanken beidseitig mit einer Beplankung versehen müßte. Des weiteren läßt sich bei dieser Ausführungsform auf einfache Weise ein doppelter Anschlag des Flügelrahmens am Blendrahmen erreichen, was eine höhere Steifheit und mechanische Festigkeit gegenüber Windlasten ergibt. Aufgrund dieser höheren Steifheit und mechanischen Festigkeit können sowohl der Flügelrahmen als auch der Isolierglasscheibenrahmen aus schmalen Profilen hergestellt sein. Durch die Abrundung der zur Schwenkachse parallelen Außenseiten des Isolierglasscheibenrahmens und der entsprechenden Innenseiten des Flügelrahmens ergibt sich ein längerer Spalt, wodurch die Dichtwirkung verbessert wird. Außerdem wird der Isolierglasscheibenrahmen im Flügelrahmen zusätzlich gegen ganzflächig auf die Isolierglasscheibe wirkende Windlasten gesichert, so daß nur eine einseitig anzusetzende Verriegelung erforderlich ist. Für den Flügelrahmen und den Blendrahmen lassen sich unveränderte übliche Fenstermodule und deren Beschlagformen wie Schwenk-Kippfensterbeschläge oder Hebflügelbeschläge und die entsprechenden Dichtungen verwenden.

Die an der Außenseite des Blendrahmens angeordnete Beplankung kann vorteilhafterweise abgebogene, an der Isolierglasscheibe mit einer Dichtung direkt anliegende Schenkel aufweisen. In diesem Fall braucht der Flügelrahmen nicht durch eine Blendseite am Blendrahmen abgedeckt zu sein, da diese Funktion vollständig durch die Beplankung übernommen wird. Die Beplankung muß dann allerdings ausreichend steif ausgebildet sein.

Bei der Ausführungsform, bei der kein eigentlicher Flügelrahmen vorhanden ist, sondern die Isolierglasscheibe mit dem Rahmen über Lenker am gebäudefesten Blendrahmen angelenkt ist, können die parallelen Lenker so gestaltet sein, daß sich das Schwenkgelenk am Rahmen in der Achse eines üblichen Fensterbeschlags zum Aufklappen des Fensterflügels befindet. Die Isolierglasscheibe mit Rahmen läßt sich dann wie ein normaler Fensterflügel öffnen und schließen. In diesem Fall sind die Lenker an dem Isolierglasscheibenrahmen durch eine Verriegelung festgelegt.

Um die Isolierglasscheibe um 180° zu wenden, wird diese Verriegelung gelöst und nach dem Wenden um 180° wieder verriegelt.

Bei einer anderen Ausführungsform eines an parallelen Lenkern geführten Isolierglasscheibenrahmens kann dieser an zwei zur Schwenkachse parallelen, gegenüberliegenden Seiten halbrunde Außenflächen aufweisen, wovon eine mit entsprechenden Flächen des Blendrahmens das Schwenkgelenk zum Aufklappen des Fensterflügels bildet, wobei die Lenker am Blendrahmen im Mittelpunkt der halbrunden Außenflächen des Isolierglasscheibenrahmens angelenkt sein können. Der gebäudefeste Blendrahmen kann vorzugsweise an wenigstens einer Seite eine mit den halbrunden Außenflächen des Rahmens mit der Isolierglasscheibe kongruente Hohlkehle aufweisen.

Bei beiden Ausführungsformen des lenkergeführten Isolierglasscheibenrahmens kann es vorteilhaft sein, das Wenden um 180° dadurch zu erleichtern, daß das Wendegelenk zum Wenden der Isolierglasscheibe um 180° an den Lenkern verschiebbar angeordnet ist und sich nach Entriegeln der Verriegelung verschieben läßt.

Wenigstens im Bereich der unteren Querleiste des Fensterflügelrahmens kann eine das Gewicht der Isolierglasscheibe und des ggf. vorhandenen Isolierglasscheibenrahmens aufnehmende Druckplatte angeordnet sein, die vorzugsweise aus einem oberflächenharten, elastischem Kunststoff hoher Gleitfähigkeit, wie z. B. Polyamid besteht. Die Druckplatte kann sich über die gesamte Länge der unteren Querleiste erstrecken und dadurch in diesem Bereich eine zusätzliche Dichtfunktion übernehmen. Die Druckplatte ist sowohl bei senkrechter als auch bei waagerechter Wendeachse der Isolierglasscheibe vorteilhaft. Bei senkrechter Wendeachse können Drehbolzen die Druckplatte durchdringen und in in der oberen und unteren Querleiste angeordneten Gegenlagerplatten gelagert sein.

Die Erfindung wird nachstehend anhand mehrerer in der Zeichnung dargestellter Ausführungsbeispiele des näheren erläutert. In der Zeichnung zeigen:
- Fig. 1: einen Querschnitt durch ein erfindungsgemäßes Fenster gemäß einer ersten Ausführungsform,
- Fig. 2: einen Querschnitt durch ein erfindungsgemäßes Fenster gemäß einer zweiten Ausführungsform,
- Fig. 3: einen Querschnitt durch ein erfindungsgemäßes Fenster, bei dem der Isolierglasscheibenrahmen am gebäudefesten Blendrahmen über Lenker angelenkt ist gemäß einer ersten Ausführungsform,
- Fig. 4: einen Querschnitt durch ein erfindungsgemäßes Fenster, bei dem der Isolierglasscheibenrahmen über Lenker am gebäudefesten Blendrahmen angelenkt ist, gemäß einer zweiten Ausführungsform,
- Fig. 5: einen Längsschnitt durch ein erfindungsgemäßes Fenster mit einer Darstellung des Wendegelenks,
- Fig. 6: einen Querschnitt durch das Fenster gemäß Fig. 5,
- Fig. 7: einen Längsschnitt durch ein erfindungsgemäßes Fenster mit detailierter Darstellung einer Metall- oder Kunststoffbeplankung und
- Fig. 8: eine perspektivische Innenansicht des erfindungsgemäßen Fensters im geöffneten Zustand.

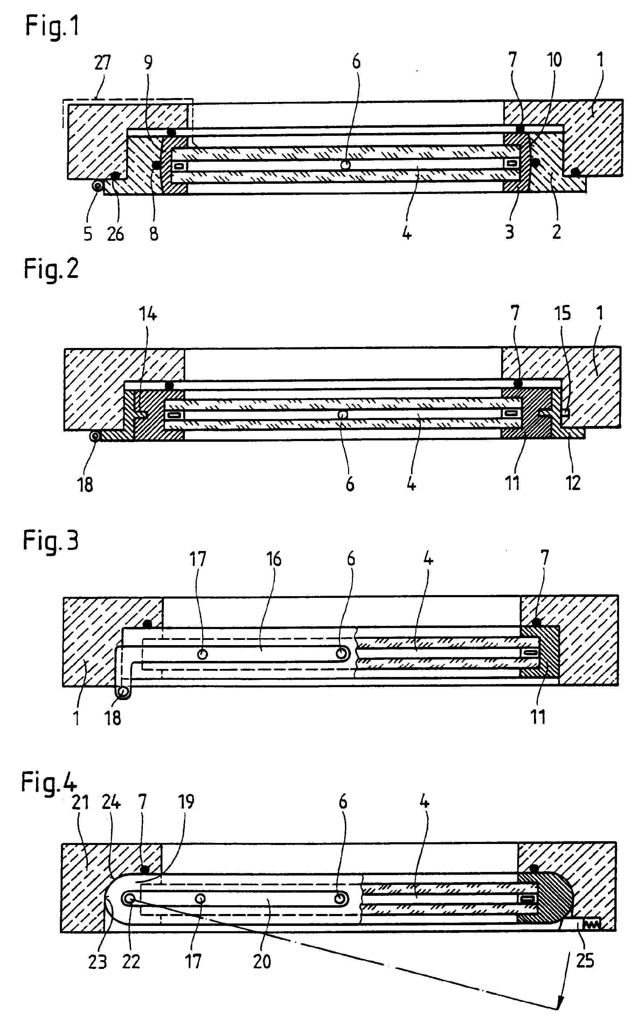

Das erfindungsgemäße Fenster ist jeweils nur schematisch im Querschnitt dargestellt und weist bei der Ausführungsform gemäß Fig. 1 einen gebäudefesten Blendrahmen 1 üblicher Art auf. In einem entsprechenden Ausschnitt des Blendrahmens 1 ist ein Flügelrahmen 2 eingepaßt und am Blendrahmen 1 über ein Schwenkgelenk 5 in Form eines üblichen Bandes schwenkbar gelagert. Dieser Flügelrahmen 2 liegt am Blendrahmen 1 mit doppeltem Anschlag an.

Eine Isolierglasscheibe 4, die in bekannter Weise aus einer Weißglasscheibe und einer mit Abstand dazu angeordneten, selektiven Absorptionsscheibe bestehen kann, ist von einem Isolierglasscheibenrahmen 3 umfaßt. Mittels eines im einzelnen nicht dargestellten, in der senkrechten Mittelachse der Isolierglasscheibe 4 angeordneten Wendegelenks 6 läßt sich die Isolierglasscheibe 4 mit dem Isolierglasscheibenrahmen 3 im Flügelrahmen 2 nach Lösen einer nichtdargestellten Verriegelung um 180° wenden und wieder verriegeln.

Im Bereich einer Seitenfläche des Isolierglasscheibenrahmens 3 ist an einem umlaufenden Vorsprung des Blendrahmens 1 eine umlaufende Dichtung 7 angeordnet, an die sich der Flügelrahmen 3, wenn das Fenster geschlossen ist, anlegt und dadurch die Abdichtung gewährleistet. Es ist erkennbar, daß durch diese eine Dichtung 7 eine vollständige Abdichtung des Fensterflügels gewährleistet ist, ohne daß eine zusätzliche Dichtung zwischen dem Isolierglasscheibenrahmen 3 und dem Flügelrahmen 2 erforderlich ist. Dennoch kann es bei bestimmten Anwendungsfällen zweckmäßig sein, eine weitere Dichtung 8, 26 zwischen dem Isolierglasscheibenrahmen 3 und dem Fensterflügelrahmen 2 und/oder dem Fensterrahmen 1 und dem Fensterflügelrahmen 2 anzuordnen, ohne daß dies jedoch in den meisten Anwendungsfällen notwendig ist.

Die zur durch die Wendegelenke 6 verlaufenden Wendeachse parallelen Außenflächen 9 des Isolierglasscheibenrahmens 3 sind mit einem Radius abgerundet, der dem Abstand zur Wendeachse entspricht. Die entsprechenden Innenflächen 10 des Flügelrahmens 2 sind ebenfalls abgerundet, so daß sich der Isolierglasscheibenrahmen 3 mit geringem Spiel in den Flügelrahmen 2 einpassen läßt. Der Isolierglasscheibenrahmen 3 verläuft innen bündig mit dem Blendrahmen 1, so daß sich mit einer einzelnen Beplankung 27 aus Metall- oder Kunststoffprofilen der Blendrahmen als auch der Flügelrahmen abdecken lassen. Auf diese Weise lassen sich wiederholte Anstriche einsparen. Bei einem üblichen Wendeflügelfenster müßte man zu diesem Zweck getrennt den Blendrahmen und zusätzlich den Wendeflügel beplanken, letzteren beidseitig.

Bei der Ausführungsform gemäß Fig. 2 ist eine Darstellungsweise gewählt, aus der sich ergibt, daß der gebäudefeste Blendrahmen 1 aus Holz oder Kunststoff und der Fensterflügelrahmen 12 aus einem verwindungssteifen Aluminium-, Kunststoff- oder Holzprofil bestehen kann. Der die Isolierglasscheibe umfassende Isolierglasscheibenrahmen 11 kann aus Holz oder Kunststoff bestehen. Der Flügelrahmen 12 ist in üblicher Weise mittels Bänder 13 am gebäudefesten Blendrahmen 1 angelenkt. An gegenüberliegenden Seiten befinden sich im Flügelrahmen 12 Verriegelungen 14, 15, von denen die Verriegelung 14 mit dem Isolierglasscheibenrahmen 11 und die Verriegelung 15 mit dem Blendrahmen 1 zusammenwirkt.

Wenn der Isolierglasscheibenrahmen 11 und der Flügelrahmen 12, wie gezeichnet, gradlinige Begrenzungsflächen aufweisen, ist zum Wenden der Isolierglasscheibe um 180° zwischen dem Isolierglasscheibenrahmen 11 und dem Flügelrahmen 12 ein etwas größeres Spiel erforderlich, als bei der Ausführungsform gemäß Fig. 1, so daß in diesem Fall eine zusätzliche Dichtung zwischen dem Isolierglasscheibenrahmen 11 und dem Flügelrahmen 12 vorteilhaft sein kann.

Bei dem Ausführungsbeispiel gemäß Fig. 3 bilden die Isolierglasscheibe 4 mit dem Isolierglasscheibenrahmen 11 ohne Zuhilfenahme eines weiteren Rahmens den Fensterflügel. Um diesen Fensterflügel in üblicher Weise öffnen und das Wenden um 180° vornehmen zu können, sind parallele Lenker 16 oberhalb und unterhalb des Isolierglasscheibenrahmens 11 angeordnet und einerseits mittels der Wendegelenke 6 am Isolierglasscheibenrahmen und andererseits über Bänder 18 am Fensterrahmen 1 angelenkt. Zusätzlich ist zwischen den Lenkern 16 und dem Isolierglasscheibenrahmen 11 eine im einzelnen nicht dargestellte Verriegelung 17 vorgesehen. Solange diese Verriegelung 17 verriegelt ist, läßt sich die Isolierglasscheibe 4 mit dem Isolierglasscheibenrahmen 11 wie ein normales Fenster öffnen, wobei es durch die Lenker gehalten und geführt um die Bänder 18 ausschwenkt. Beim Schließen legt sich der Isolierglasscheibenrahmen 11, wie bereits beschrieben, gegen einen Vorsprung des Blendrahmens 1 und schließt dabei die umlaufende Dichtung 7 ab.

Soll die Isolierglasscheibe 4 mit dem Isolierglasscheibenrahmen 11 um die Wendegelenke 6 um 180° geschwenkt werden, wird die Verriegelung 17 bei geöffnetem Fenster gelöst und nach dem Wenden um 180° wieder verriegelt.

Bei der Ausführungsform gemäß Fig. 4 sind die Lenker 20 in der Ebene der Isolierglasscheibe 4 am Blendrahmen 21 angelenkt. Der Isolierglasscheibenrahmen 19 weist an den zur durch die Wendegelenke 6 verlaufende Wendeachse parallelen Außenflächen 23 einen halbrunden Querschnitt auf, die mit entsprechenden, kongruenten Hohlkehlen 24 des Blendrahmens 21 im Sinne von Bändern zusammenwirken. Um das Öffnen, des so gestalteten Fensterflügels ohne Zwängen zu ermöglichen, sind die Lenker 20 im Mittelpunkt des Halbkreises der Außenflächen 23 am Blendrahmen 21 angelenkt. Die Verriegelung 17 zwischen den Lenkern 20 und dem Isolierglasscheibenrahmen 19 ist auch hier vorgesehen. Die Hohlkehle 24 im Blendrahmen 21 kann, wie dargestellt, einen Viertelkreis bilden und dann in aufeinander senkrechte Geraden übergehen. Es ist jedoch auch möglich, die Hohlkehle 24 um mehr als 90° um die halbrunde Außenfläche 23 herumzuführen, um das Schwenkgelenk in diesem Bereich spielfrei zu führen und die Schwenkgelenke 22 der Lenker 20 von zu großer Beanspruchung zu entlasten. In diesem Fall läßt sich das Wenden der Isolierglasscheibe 4 mit dem Isolierglasscheibenrahmen 19 um 180° erleichtern, wenn die Wendegelenke 6 in den Lenkern 20 verschiebbar angeordnet sind, d. h. sich die Isolierglasscheibe 4 mit dem Isolierglasscheibenrahmen 19 nach Lösen der Verriegelung 17 aus dem durch die halbrunde Fläche 23 und die Hohlkehle 24 gebildeten Bändern herausziehen läßt.

Auf der der Hohlkehle gegenüberliegenden Seite des Blendrahmens 21 kann ebenfalls eine Hohlkehle ausgebildet sein, wobei die Verriegelung des Fensterflügels im geschlossenen Zustand durch eine unter Federkraft verschiebbare Leiste 25 erfolgen kann.

Auch bei der Ausführungsform gemäß Fig. 4 ist nur eine umlaufende Dichtung 7 zwischen dem Blendrahmen 21 und dem Isolierglasscheibenrahmen 19 vorhanden. Des weiteren ist anzumerken, daß ein Schwenkgelenk mit der halbrunden Außenfläche 23 auch dann gegeben ist, wenn der Blendrahmen 21 keine Hohlkehle 24 aufweist, sondern die entsprechenden Flächen am Blendrahmen 21 rechtwinklig aufeinanderstoßen. In diesem Fall findet zwischen der halbrunden Fläche 23 und dem Blendrahmen 21 jedoch keine Flächenberührung, sondern nur eine Linienberührung statt.

Bei allen Ausführungsformen kann auf einen Isolierglasscheibenrahmen unter Umständen ganz verzichtet werden, wenn die Isolierglasscheibe 4 in geeigneter Weise direkt mit dem Flügelrahmen 2 bzw. 12 oder den Lenkern 16 bzw. 20 gelenkig und verriegelbar verbunden wird. Wichtig ist in allen Fällen die zum Blendrahmen 1, 21 abdichtende, umlaufende Dichtung 7.

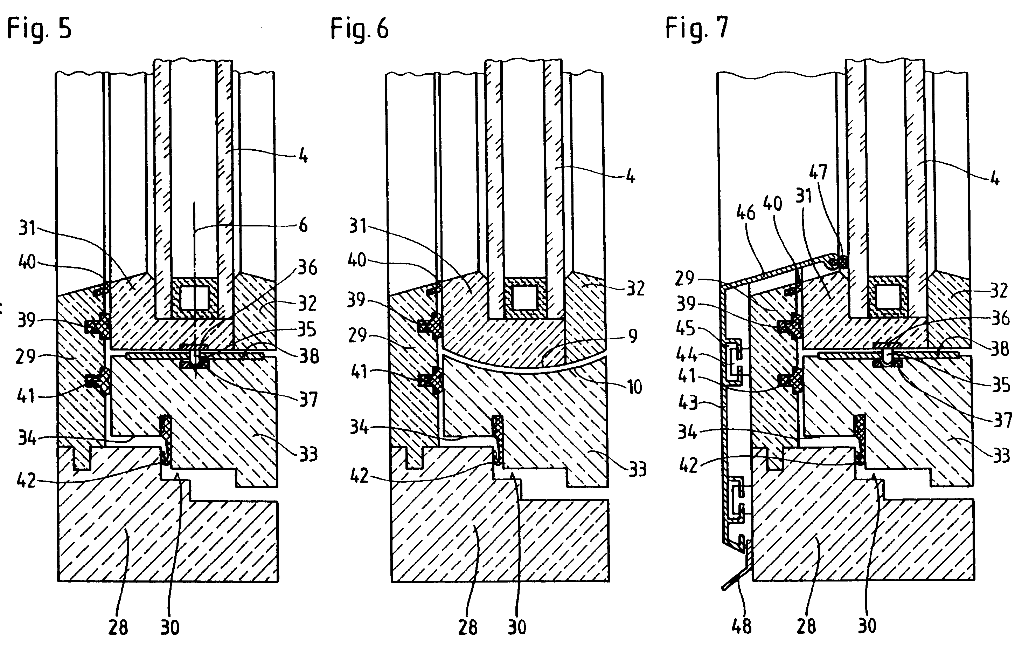

Die in Fig. 5 bis 8 dargestellen Ausführungsformen zeigen einen detaillierten Schnitt bzw. eine perspektivische Ansicht, bei denen das erfindungsgemäße Fenster einen Blendrahmen 28 mit einer angesetzten Blende 29 aus Holz aufweist. Der Blendrahmen 28 ist mit einem Stufenfalz 30 versehen, der mit einem entsprechenden Stufenfalz 34 am Fensterflügelrahmen 33 unter Zwischenschaltung einer umlaufenden Dichtung 42 zusammenwirkt. Die Isolierglasscheibe 4 ist in einen Isolierglasscheibenrahmen 31 mittels einer Abdeckleiste 32 gehalten.

Die senkrechte Wendeachse 6 ergibt sich durch ein mittels einer Befestigungsplatte 36 am Isolierglasscheibenrahmen 31 befestigten Drehbolzenpaar 35. Der untere, dargestellte Drehbolzen 35 kann höheneinstellbar sein und ist in einer, in den Fensterflügelrahmen 33 eingelassenen Gegenlagerplatte 37 gelagert. Diese Gegenlagerplatte 37 übernimmt die Führung beim Wenden der Isolierglasscheibe 4, während das Gewicht der Isolierglasscheibe 4 und des Isolierglasscheibenrahmens 31, 32 durch eine Druckplatte 38 aufgenommen wird. Diese Druckplatte 38 ist in die untere Querleiste des Fensterflügelrahmens 33 mit einem geringen Überstand eingelassen und erreicht fast die Breite des Fensterflügelrahmens 33. Bevorzugterweise erstreckt sich die Druckplatte 38 über die gesamte Länge der unteren Querleiste des Fensterflügelrahmens 33 und bildet somit eine großflächige Auflage für den Isolierglasscheibenrahmen 31, 32 oder direkt für die Isolierglasscheibe 4, falls sie ohne Rahmen am Fensterflügelrahmen 33 um 180° schwenkbar befestigt ist.

Die Druckplatte 38 besteht vorzugsweise aus einem oberflächenharten, elastischen Kunststoff mit hoher Gleitfähigkeit, z. B. Polyamid und ergibt in diesem Bereich eine zusätzliche, zuverlässige Dichtung.

Die Isolierglasscheibe 4 mit ihrem Rahmen 31, 32 kann, wie dargestellt, mit senkrechter Wendeachse an dem Fensterflügelrahmen 33 angeordnet sein. In diesem Fall verlaufen die in Fig. 6 dargestellten abgerundeten Außenseiten 9 des Isolierglasscheibenrahmens 31, 32 und die abgerundeten Innenseiten 10 des Fensterflügelrahmens 33 senkrecht und parallel zur Wendeachse 6. Die Druckplatte 38 befindet sich im Bereich des unteren Drehbolzens 35, der die Druckplatte 38 bis zur Gegenlagerplatte 37 durchdringt.

Weist das erfindungsgemäße Fenster eine Isolierglasscheibe 4 mit waagerechter Wendeachse auf, befinden sich die abgerundeten Außen- bzw. Innenseiten 9, 10 im Bereich der oberen und unteren Querleiste des Isolierglasscheibenrahmens 31, 32 und des Fensterflügelrahmens 33, und die Druckplatte 38 ist im Bereich der unteren Querleisten angeordnet. In diesem Fall dient diese Druckplatte zur Entlastung der Drehbolzen 35 und der Gegenlagerplatte 37, wenn das Fenster geschlossen ist.

Das in Fig. 5 und 6 dargestellte Fenster kann gemäß Fig. 7 mit einer an der Außenseite des Blendrahmens 28, 29 angeordneten Beplankung 43 abgedeckt sein. Diese Beplankung 43 weist Nuten 45 auf, in die Befestigungselemente 44, die an dem Blendrahmen 28, 29 angeschraubt sind, eingreifen. Ein abgebogener Schenkel 46 an der Beplankung 43 reicht bis in den Bereich des Randes der Isolierglasscheibe 4 und liegt an der Isolierglasscheibe 4 mittels einer Dichtung 47 an.

In dem in Fig. 5 bis 7 dargestellten Ausführungsbeispiel sind somit die Dichtung 47 zwischen dem Schenkel 46 und der Isolierglasscheibe 4, zwei Dichtungen 39, 40 zwischen der Blende 29 und dem Isolierglasscheibenrahmen 31, eine Dichtung 41 zwischen der Blende 29 und dem Fensterflügelrahmen 33 sowie eine Dichtung 42 zwischen dem Blendrahmen 28 und dem Fensterflügelrahmen 33 im Bereich der Stufenfalze 30, 34 vorhanden.

Die Beplankung 43 kann aus Metall- oder Kunststoff bestehen und ggf. so ausgebildet sein, daß auf eine Blende 29 verzichtet werden kann. In diesem Fall muß die Beplankung und deren Befestigung ausreichend steif ausgebildet sein, um entweder über die Dichtung 47 allein oder eine oder mehrere zusätzliche Dichtungen zwischen der Beplankung und dem Isolierglasscheibenrahmen 31, 32 und/oder dem Fensterflügelrahmen 33 eine wirkungsvolle Abdichtung zu erzielen.

In den Zwischenraum zwischen der Beplankung 43, 46 und dem Blendrahmen 28, 29, dem Isolierglasscheibenrahmen 31, 32 und dem Fensterflügelrahmen 33 gelangendes Wasser, insbesondere Kondenswasser wird über eine Eckleiste 48 nach außen abgeleitet.

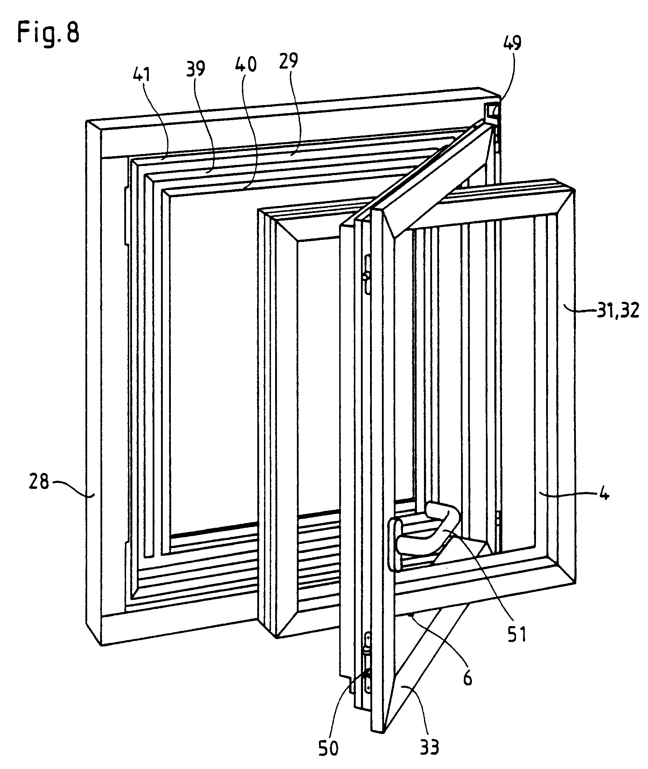

In Fig. 8 ist das erfindungsgemäße Fenster gemäß Fig. 5 und 6 perspektivisch dargestellt. Der Fensterflügel ist geöffnet, so daß man den Fensterflügelrahmen 33 mit einem dreiseitigen Verriegelungsband 50 und einem Verriegelungsgriff 51 erkennen kann. Der Isolierglasscheibenrahmen 31, 32 ist entriegelt und herausgeklappt, so daß erkennbar ist, wie das Umstellen von der Sommer- auf die Winterposition vor sich geht. Der Fensterflügelrahmen 33 ist mittels eines üblichen Drehkippenschlags 49 am Blendrahmen 28 angelenkt, so daß sich das erfindungsgemäße Fenster wie ein ganz normales Fenster handhaben läßt.

Selbstverständlich kann bei allen Ausführungsformen der Fensterflügel bezüglich der Öffnungsart sowohl als Drehflügel, als auch als Kipp- und Klappflügel ausgebildet werden.

## Patentansprüche

1. In einem Blendrahmen angeordnetes, um eine Mittelachse von 180° wendbares, wenigstens einen sich in üblicher Weise öffnen lassenden Fensterflügel aufweisendes Fenster mit
- einer Isolierglasscheibe (4) aus einer Weißglasscheibe und einer selektiven Absorptionsscheibe,
- einem im Bereich einer Seitenkante angeordneten Schwenkgelenk (5, 13, 18, 22, 49) zum Aufklappen des Fensterflügels,
- einem in einer senkrechten oder waagerechten Mittelachse an der Isolierglasscheibe (4) angeordneten Wendegelenk (6, 35) zum Wenden der Isolierglasscheibe um 180°,
- einem gebäudefesten Blendrahmen (1; 21, 28, 29) und
- wenigstens einer umlaufenden, in den beiden Stellungen der Isolierglasscheibe eine Abdichtung zum Fensterflügel und/oder zum Blendrahmen bewirkenden Dichtung (7, 8; 39, 40).

2. Fenster nach Anspruch 1, **dadurch gekennzeichnet,** daß ein die Isolierglasscheibe (4) allseitig umfassender Rahmen (3, 11; 31, 32) schwenkbar in einem, einen Fensterflügel bildenden, am Blendrahmen (1, 28, 29) schwenkbar angelenkten Rahmen (2, 12, 33) angeordnet ist, der Rahmen mit der Isolierglasscheibe im geschlossenen Zustand des Flügelrahmens mit einer Seite am Blendrahmen anliegt und die Dichtung (7, 39, 40) zwischen dem Blendrahmen und dem Rahmen für die Isolierglasscheibe angeordnet ist.

3. Fenster nach Anspruch 1, **dadurch gekennzeichnet,** daß ein die Isolierglasscheibe (4) allseitig umfassender Rahmen (19) an zwei gegenüberliegenden Seiten eine halbrunde Außenfläche (23) aufweist und mit entsprechenden Flächen (24) des Blendrahmens (21) das Schwenkgelenk (22) zum Aufklappen des Fensterflügels bildet, daß das Wendegelenk (6) zum Wenden der Isolierglasscheibe (4) um 180° mit parallelen, am Blendrahmen im Bereich der Achse des Wendegelenks zum Aufklappen des Fensterflügels angelenkten, mit dem Fensterflügel aufklappbaren Lenkern (20) verbunden ist und die Dichtung (7) zwischen dem Blendrahmen und dem Rahmen für die Isolierglasscheibe angeordnet ist.

4. Fenster nach Anspruch 1, **dadurch gekennzeichnet,** daß das Wendegelenk (6) zum Wenden der Isolierglasscheibe (4) um 180° mit parallelen, am Blendrahmen (1) im Bereich der Achse (18) eines üblichen Schwenkgelenks zum Aufklappen des Fensterflügels angelenkten, mit dem Fensterflügel aufklappbaren und mit der Isolierglasscheibe (4) verriegelbaren Lenkern (16) verbunden ist und die Dichtung (7) zwischen dem Blendrahmen (1) und der Isolierglasscheibe (4) angeordnet ist.

5. Fenster nach Anspruch 2, 3 oder 4, **dadurch gekennzeichnet,** daß der Rahmen (3, 11, 19, 31, 32), die Isolierglasscheibe (4) und der den Fensterflügel bildende Rahmen (3, 11, 33) oder die parallelen Lenker (16, 20) miteinander verriegelbar sind.

6. Fenster nach Anspruch 2 oder 5, **dadurch gekennzeichnet**, daß zwischen dem Rahmen (3, 11, 19) für die Isolierglasscheibe (4) und dem den Fensterflügel bildenden Rahmen (2, 12) eine umlaufende Dichtung (8) angeordnet ist.

7. Fenster nach Anspruch 2, 5 oder 6, **dadurch gekennzeichnet,** daß die zur Wendeachse (6) parallelen Außenseiten (9) des Rahmens (3; 31, 32) für die Isolierglasscheibe (4) und die entsprechenden Innenseiten (10) des den Fensterflügel bildenden Rahmens (2, 33) mit einem Radius entsprechend dem Abstand zum Wendegelenk (6, 35) zum Wenden der Isolierglasscheibe (4) um 180° gestaltet sind.

8. Fenster nach einem oder mehreren der Ansprüche 2, 5 bis 7, **dadurch gekennzeichnet**, daß der Blendrahmen (1, 21, 28, 29) aus Holz, Aluminium oder Kunststoff, der den Fensterflügel bildende Rahmen (2, 11, 33) aus verwindungssteifen Aluminium-, Kunststoff- oder Holzprofilen und der Rahmen (3, 11, 19, 31, 32) für das Isolierglas (4) aus Holz oder Kunststoff bestehen.

9. Fenster nach Anspruch 3, 4 oder 5**, dadurch gekennzeichnet,** daß das Wendegelenk (6) zum Wenden der Isolierglasscheibe (4) um 180° an den Lenkern (16, 20) verschiebbar angeordnet ist.

10. Fenster nach Anspruch 3 oder 4, **dadurch gekennzeichnet,** daß die Lenker (20) am Blendrahmen (21) im Mittelpunkt der halbrunden Außenfläche (23) des Rahmens (19) mit der Isolierglasscheibe (4) angelenkt sind.

11. Fenster nach Anspruch 3 oder 5, **dadurch gekennzeichnet**, daß der Blendrahmen (21) an wenigstens einer Seite eine den halbrunden Außenflächen (23) des Rahmens (19) mit der Isolierglasscheibe (4) kongruente Hohlkehle (24) aufweist.

12. Fenster nach Anspruch 2, **dadurch gekennzeichnet**, daß der Flügelrahmen (2, 12, 33) mit einem doppelten Anschlag am Blendrahmen (1, 28, 29) anliegt und an wenigstens einem der Anschläge eine zusätzliche umlaufende Dichtung (26, 42) angeordnet ist.

13. Fenster nach einem oder mehreren der Ansprüche 1 bis 12, **dadurch gekennzeichnet**, daß der Flügelrahmen (2, 12, 33) beim Anschlag an den Blendrahmen (1; 28, 29) diesen umlaufend möglichst nicht überragt, also vom Blendrahmen (1; 28, 29) außenseitig bedeckt wird.

14. Fenster nach einem oder mehreren der Ansprüche 1 bis 13, **dadurch gekennzeichnet**, daß zumindest der Blendrahmen (1; 28, 29) des Fensters außenseitig mit profilierten Leisten (27; 43, 46) aus Metall oder Kunststoff (27; 43, 46) beplankt ist.

15. Fenster nach Anspruch 14, **dadurch gekennzeichnet,** daß die an der Außenseite des Blendrahmens (28, 29) angeordnete Beplankung (43) abgebogene, an der Isolierglasscheibe (4) mit einer Dichtung (47) anliegende Schenkel (46) aufweist.

16. Fenster nach einem oder mehreren der Ansprüche 1 bis 15, **dadurch gekennzeichnet,** daß wenigstens im Bereich der unteren Querleiste des Fensterflügelrahmens (2, 33) eine das Gewicht der Isolierglasscheibe und des ggf. vorhandenen Isolierglasscheibenrahmens (3; 31, 32) aufnehmende Druckplatte (38) angeordnet ist.

17. Fenster nach Anspruch 16, **dadurch gekennzeichnet,** daß die Druckplatte (38) aus einem oberflächenharten, elastischen Kunststoff hoher Gleitfähigkeit besteht.

18. Fenster nach Anspruch 16 oder 17, **dadurch gekennzeichnet**, daß sich die Druckplatte (38) über die gesamte Länge der unteren Querleiste erstreckt.

19. Fenster nach einem oder mehreren der Ansprüche 16 bis 18, **dadurch gekennzeichnet,** daß Drehbolzen (35) die senkrechte Wendeachse (6) bilden, die Druckplatte (38) durchdringen und in in der oberen und unteren Querleiste angeordneten Gegenlagerplatten (37) gelagert sind.

## Claims

1. Window located in a blind frame, able to be turned through 180° about a central axis and comprising at least one casement able to be opened in the conventional manner with
- an insulating glass pane (4) consisting of a clear glass pane and a selective absorption pane,
- a swivel hinge (5, 13, 18, 22, 49) located in the region of one side edge, for opening up the casement,
- a turning hinge (6, 35) located in a vertical or horizontal central axis on the insulating glass pane (4), for turning the insulating glass pane through 180°,
- a blind frame (1; 21, 28, 29) integral with the building and
- at least one peripheral seal (7, 8; 39, 40) bringing about sealing with respect to the casement and/or to the blind frame in the two positions of the insulating glass pane.

2. Window according to Claim 1, characterised in that a frame (3, 11; 31, 32) enclosing the insulating glass pane (4) on all sides is arranged to tilt in a frame (2, 12, 33) forming a casement and which is hinged on the blind frame (1, 28, 29), in the closed state of the casement frame, the frame with the insulating glass pane bearing by one side against the blind frame and the seal (7, 39, 40) being located between the blind frame and the frame for the insulating glass pane.

3. Window according to Claim 1, characterised in that a frame (19) enclosing the insulating glass pane (4) on all sides comprises on two opposite sides a half-round outer surface (23), and with corresponding surfaces (24) of the blind frame (21) forms the swivel hinge (22) for opening up the casement, that the turning hinge (6) for turning the insulating glass pane (4) through 180° is connected to parallel guide rods (20) pivoted on the blind frame in the region of the axis of the turning hinge for opening out the casement and which can be opened out with the casement and the seal (7) is located between the blind frame and the frame for the insulating glass pane.

4. Window according to Claim 1, characterised in that the turning hinge (6) for turning the insulating glass pane (4) through 180° is connected to parallel guide rods (20) pivoted on the blind frame (1) in the region of the pivot pin (18) of a conventional swivel hinge for opening out the casement, which is able to be opened out with the casement and can be locked to the insulating glass pane (4) and the seal (7) is located between the blind frame (1) and the insulating glass pane (4).

5. Window according to Claim 2, 3 or 4, characterised in that the frame (3, 11, 19, 31, 32), the insulating glass pane (4) and the frame (3, 11, 33) forming the casement or the parallel guide rods (16, 20) can be locked one to another.

6. Window according to Claim 2 or 5, characterised in that located between the frame (3, 11, 19) for the insulating glass pane (4) and the frame (2, 12) forming the casement is a peripheral seal (8).

7. Window according to Claim 2, 5 or 6, characterised in that the outer sides (9) of the frame (3, 31, 32) for the insulating glass pane (4), which are parallel to the turning axis (6) and the corresponding inner sides (10) of the frame (2, 33) forming the casement are designed with a radius corresponding to the distance from the turning hinge (6, 35) for turning the insulating glass pane (4) through 180°.

8. Window according to one or more of Claims 2, 5 to 7, characterised in that the blind frame (1, 21, 28, 29) consists of wood, aluminium or synthetic material, the frame (2, 11, 33) forming the casement consists of torsionally rigid aluminium, synthetic material or wood profiles and the frame (3, 11, 19, 31, 32) for the insulating glass (4) consists of wood or synthetic material.

9. Window according to Claim 3, 4 or 5, characterised in that the turning hinge (6) for turning the insulating glass pane (4) through 180° is arranged to slide on the guide rods (16, 20).

10. Window according to Claim 3 or 4, characterised in that the guide rods (20) are pivoted on the blind frame (21) at the centre of the half-round outer surface (23) of the frame (19) with the insulating glass pane (4).

11. Window according to Claim 3 or 5, characterised in that on at least one side, the blind frame (21) comprises a hollow groove (24) congruent with the half-round outer surfaces (23) of the frame (19) with the insulating glass pane (4).

12. Window according to Claim 2, characterised in that the casement (2, 12, 33) bears with a double rabbet against the blind frame (1, 28, 29) and an additional peripheral seal (26, 42) is located on at least one of the rabbets.

13. Window according to one or more of Claims 1 to 12, characterised in that at the rabbet on the blind frame (1; 28, 29) the casement (2, 12, 33), extending around the latter, as far as possible does not project beyond it, thus is covered on the outside by the blind frame (1; 28, 29).

14. Window according to one or more of Claims 1 to 13, characterised in that at least the blind frame (1; 28, 29) of the window is covered on the outside with profiled strips (27; 43, 46) of metal or synthetic material (27; 43, 46).

15. Window according to Claim 14, characterised in that the covering (43) located on the outside of the blind frame (28, 29) comprises bent legs (46) bearing against the insulating glass pane (4) by a seal (47).

16. Window according to one or more of Claims 1 to 15, characterised in that at least in the region of the lower transverse strip of the casement frame (2, 33), a pressure plate (38) is located receiving the weight of the insulating glass pane and of the insulating glass pane frame (3; 31, 32) which is possibly present.

17. Window according to Claim 16, characterised in that the pressure plate (38) consists of a resilient synthetic material having a hard surface and a high sliding ability.

18. Window according to Claim 16 or 17, characterised in that the pressure plate (38) extends over the entire length of the lower transverse strip.

19. Window according to one or more of Claims 16 to 18, characterised in that pivot pins (35) form the vertical turning axis (6), penetrate the pressure plate (38) and are mounted in counter support plates (37) arranged in the upper and lower transverse strip.

## Revendications

1. Fenêtre montée dans un châssis dormant, tournant de 180 autour d'un axe central, comportant au moins un vantail de fenêtre s'ouvrant de manière usuelle avec
- une vitre isolante (4) faite d'un verre blanc et d'un verre d'absorption sélective,
- une articulation de pivotement (5, 3, 18, 22, 49), montée dans la zone d'un bord latéral, pour ouvrir le vantail,
- une articulation de rotation (6, 35) montée sur un axe central vertical ou horizontal sur la vitre isolante (4), pour faire tourner de 180° la vitre isolante,
- un châssis dormant (1 ; 21, 28, 29) solidaire du bâtiment et
- au moins une garniture d'étanchéité (7, 8 ; 39, 40) sur le pourtour, assurant l'étanchéité par rapport au vantail et/ou au châssis dormant, dans les deux positions de la vitre isolante.

2. Fenêtre selon la revendication 1, caractérisée en ce qu'un châssis (3, 11 ; 31, 32) entourant la vitre isolante (4) de tous côtés est monté pivotant dans un châssis (2, 12, 33) formant un vantail de fenêtre, articulé pivotant sur le châssis dormant (1, 28, 29), le châssis avec la vitre isolante, à l'état fermé du châssis du vantail, s'applique avec un côté contre le châssis dormant et la garniture d'étanchéité (7, 39, 40) est placée entre le châssis dormant et le châssis de la vitre isolante.

3. Fenêtre selon la revendication 1, caractérisée en ce qu'un châssis (19), entourant la vitre isolante (4) de tous côtés, présente sur deux côtés se faisant face une surface extérieure (23) semi-arrondie et forme avec des surfaces (24) correspondantes du châssis dormant (21), l'articulation de pivotement (22) pour l'ouverture du vantail, en ce que l'articulation de rotation (6) pour faire tourner la vitre isolante (4) de 180° est reliée à des bras oscillants (24) parallèles, à déployer avec le vantail, articulés sur le châssis dormant dans la zone de l'axe de l'articulation de rotation pour l'ouverture du vantail, et la garniture d'étanchéité (7) est placée entre le châssis dormant et le châssis de la vitre isolante.

4. Fenêtre selon la revendication 1, caractérisée en ce qu'un l'articulation de rotation (6) pour faire tourner la vitre isolante (4) de 180° est reliée à des bras oscillants (16) parallèles, articulés sur le châssis dormant (1) dans la zone de l'axe (18) d'une articulation de pivotement usuelle pour l'ouverture du vantail, à ouvrir avec le vantail et verrouillable avec la vitre isolante (4) et la garniture d'étanchéité (7) et placée entre le châssis dormant (1) et la vitre isolante (4).

5. Fenêtre selon les revendications 2, 3 ou 4, caractérisée en ce que le châssis (3, 11, 19, 31, 32), la vitre isolante (4) et le châssis (3) (11, 33) formant le vantail ou les bras oscillants (16, 20) parallèles sont verrouillables entre eux.

6. Fenêtre selon les revendications 2 ou 5, caractérisée en ce qu'une garniture d'étanchéité (8) continue est prévue entre le châssis (3, 11, 19) de la vitre isolante (4) et le châssis (2, 12) formant le vantail de la fenêtre.

7. Fenêtre selon les revendications 2, 5 ou 6, caractérisée en ce que les côtés extérieurs (9) du châssis (3 ; 31, 32) de la vitre isolante (4), parallèles à l'axe de rotation (6), et les côtés intérieurs (10) correspondants du châssis (2, 33) formant le vantail, ont un rayon qui correspond à la distance par rapport à l'articulation de rotation (6, 35) pour faire tourner la vitre isolante (4) de 180°.

8. Fenêtre selon une ou plusieurs des revendications 2, 5 à 7, caractérisée en ce que le châssis dormant (1, 21, 28, 29) est en bois, aluminium ou matière plastique, le châssis (2, 11, 33) formant la vantail est en profilés indéformables d'aluminium, de matière plastique ou de bois et le châssis (3, 11, 19, 31, 32) pour la vitre isolante (4) est en bois ou en matière plastique.

9. Fenêtre selon les revendications 3, 4 ou 5, caractérisée en ce que l'articulation de rotation (6) pour faire tourner la vitre isolante (4) de 180° est montée coulissante sur les bras oscillants (16, 20).

10. Fenêtre selon les revendications 3 ou 4, caractérisée en ce que les bras oscillants (20) sont articulés sur le châssis dormant (21) au centre de la surface extérieure (23) semi-arrondie du châssis (19) avec la vitre isolante (4).

11. Fenêtre selon les revendications 3 ou 5, caractérisée en ce que le châssis dormant (21) présente sur au moins un côté, une gorge creuse (24) correspondant aux surfaces extérieures (23) semi-arrondies du châssis (19) avec la vitre isolante (4).

12. Fenêtre selon la revendication 2, caractérisée en ce que le châssis ouvrant (2, 12, 33) s'applique avec une double feuillure contre le châssis dormant (1, 28, 29) et en ce que sur l'une au moins des feuillures il est prévu une garniture d'étanchéité (26, 42) continue supplémentaire.

13. Fenêtre selon une ou plusieurs des revendications 1 à 12, caractérisée en ce que le châssis dormant (2, 12, 33) en butée contre le châssis dormant (1 ; 28, 29) ne dépasse si possible pas de celui-ci tout autour, c'est-à-dire qu'il est recouvert extérieurement par le châssis dormant (1 ; 28, 29).

14. Fenêtre selon une ou plusieurs des revendications 1 à 13, caractérisée en ce que le châssis dormant (1 ; 28, 29) au moins de la fenêtre est bordé extérieurement avec des baguettes profilées (27 ; 43, 46) en métal ou en matière plastique (27 ; 43, 46).

15. Fenêtre selon la revendication 14, caractérisée en ce que la bordure (43) placée sur le côté extérieur du châssis dormant (28, 29) comporte des ailes (46) repliées, s'appliquant contre la vitre isolante (4) avec une garniture d'étanchéité (47).

16. Fenêtre selon une ou plusieurs des revendications 1 à 15, caractérisée en ce qu'au moins dans la zone de la traverse inférieure du châssis ouvrant (2, 33), il est prévu une plaque de pression (38) absorbant le poids de la vitre isolante et de l'éventuel châssis (3 ; 31, 32) de la vitre isolante.

17. Fenêtre selon la revendication 16, caractérisée en ce que la plaque de pression (38) est réalisée dans une matière plastique élastique, de surface dure, présentant une grande facilité de glissement.

18. Fenêtre selon les revendications 16 ou 17, caractérisée en ce que la plaque de pression (38) s'étend sur toute la longueur de la traverse inférieure.

19. Fenêtre selon une ou plusieurs des revendications 16 à 18, caractérisée en ce que des tiges de rotation (35) forment l'axe de rotation (6) vertical, traversent la plaque de pression (38) et sont montées dans des contre-plaques d'appui (37), placées dans la traverse supérieure et la traverse inférieure.
